# EUROPEAN PATENT SPECIFICATION

(11) **EP 1 657 996 B1**
(45) Date of publication and mention of the grant of the patent: **12.02.2014**
(21) Application number: 04761480.5
(22) Date of filing: 20.08.2004
(51) Int. Cl.: A47C 27/06, A47C 27/20

(54) **METHOD TO PRODUCE A MATTRESS CORE**
VERFAHREN ZUR HERSTELLUNG EINES MATRATZENKERNS
PROCEDE DE PRODUCTION DE REMBOURRAGE DE MATELAS

(30) Priority: 27.08.2003 BE 200300466
(43) Date of publication of application: 24.05.2006
(73) Proprietor: IMHOLD, naamloze vennootschap, B-9100 Sint-Niklaas (BE)
(72) Inventor: POPPE, Willy, B-9100 Sint-Niklaas (BE)
(74) Representative: Donné, Eddy
(86) International application number: PCT/BE2004/000119
(87) International publication number: WO 2005/020761

(56) References cited:
- EP-A- 0 624 332
- WO-A-92/16128
- WO-A-03/003878
- BE-A- 878 380
- DE-A- 1 952 563
- US-A- 5 471 725
- US-A- 5 868 383
- US-B1- 6 347 423

## Description

The present invention concerns a method to produce a mattress core.

In particular, the invention aims a method to produce a mattress core of the type consisting of two flexible supports in between which successive rows of composed springs, analogous to those of the European patent no. 0.624.332, have been applied each consisting of a wire spring around which is applied a flexible tubular casing of foam, which casing is provided with radially directed cavities.

It is known that to produce such mattress cores a method is applied whereby the composed springs are glued at their crosscut end faces and provided with a finishing layer.

It is known that to produce such mattress cores in general a limited number of types of standard pre-formed springs are used as a basis, each with their specific characteristics regarding compressibility, which is obtained by the use of deviant wire diameters of the steel spring. These springs are applied according to a certain standard pattern in between the supports to create for example areas where the mattress cores is softer than in other areas.

A disadvantage of this method is that only a limited number of types of springs can be created, so that one can only in a limited way take advantage of the flexibility of the aforementioned areas to be able to adjust the lay comfort of the mattress core.

Another disadvantage is the large diameter of the composed springs used, which diameter is about 120 millimetre, due to which only a limited number of springs can be used in a mattress core and the load on each spring is very larger. Yet another disadvantage of this known method is that the mattress cores are produced according to a previously determined standard configuration, whereby the softer and more rigid areas are always located in the same locations in the mattress core and whereby, for example at the location of the pelvis, softer springs are being used.

A disadvantage connected therewith is the fact that such standard mattresses are not necessarily suitable for every user and that the lay comfort experienced by the user depends on the figure, the personal preference and the like.

To this end, the invention concerns a method to produce a mattress core that consists of at least the following steps: a step of producing wire springs with various wire diameters wherein use is made of reels with spring wires which are made into wire springs with various diameters by coiling the wire; a step of forming flexible tubular foam casings provided with radially directed cavities which casings have various characteristics; a step of forming composed springs with a desired rigidity from a suitable combination of a casing and a wire spring by means of applying the casing around the wire spring; a step of applying glue to the cross-cut end faces of the composed springs; a step of applying the composed springs provided with glue, in successive rows, between two flexible supports, according to a user's desired lay-out pattern of composed spring characteristics.

This method allows for the formation of mattress cores in a flexible way with various characteristics, whereby for each spring separately the desired rigidity may be imposed in order to be able to produce mattress cores which regarding lay comfort completely comply with the specific needs of each user.

To compose the composed springs preferably use is made of foam casings, the inner diameter of which, when not applied around the wire spring, is smaller than the outer diameter of the wire springs concerned, this contrary to the known composed springs, as described in the EP 0.624.332, whereby foam casings are applied with an inner diameter equal to the outer diameter of the wire springs.

Because the inner diameter of the casing is smaller than the outer diameter of the wire spring, the casing is tightened around the wire spring, and the radially directed cavities of the foam casing are so to speak opened wide, as a result of which the rigidity of the composed springs can be adjusted more accurately than in the known applications whereby the casings are applied without stress over the wire springs.

Depending on the desired characteristics of a concerned composed spring, a foam casing is chosen according to the invention with a suitable inner diameter and thickness of the foam casing and with a suitable rigidity of the foam.

An advantage of this method for the composition of the springs is that in this way there will be an almost infinitely number of possibilities to change the rigidity of each composed spring of the mattress core by adjusting the inner diameter of the foam casing.

Another advantage is that the composed springs have a smaller inner diameter than the known composed springs with similar characteristics, due to which a larger number of springs can be applied in a mattress core resulting in yet more possibilities than in the past in order to be able to adjust the mattress core on the spot according to the desires of the user.

Yet another advantage is that in practice due to the tension exercised by the foam casing, use can be made of casings with a thinner wall than in the case of the known springs, so that a considerable saving of foam can be realised which may be more than 50% without fatigue tests showing considerable loss of rigidity or height. Preferably, the method is executed according to an automated process whereby, so as to speak made to measure each user, based on a desired layout pattern for the springs imposed by said user and based on the imposed desired characteristics which may for example be determined by a computerised measurement system, for each of the said springs separately, the suitable wire springs and casings are made and combined with each other to obtain springs with the imposed desired characteristics and whereby the obtained springs, when composing the rows, are applied on the desired location in order to form the successive rows of springs with the desired composition and characteristics of the mattress core to be produced.

In order to better explain the characteristics of the invention, a preferred embodiment of a method to produce a mattress core according to the invention is described as an example without being limitative in any way, as well as a preferred embodiment of a composed spring applied therewith, with reference to the accompanying drawings, in which:
Figure 1 is a schematic representation of the successive steps of a method according to the invention;
Figure 2 is a representation on a larger scale of a part which is indicated in figure 1 as F2.

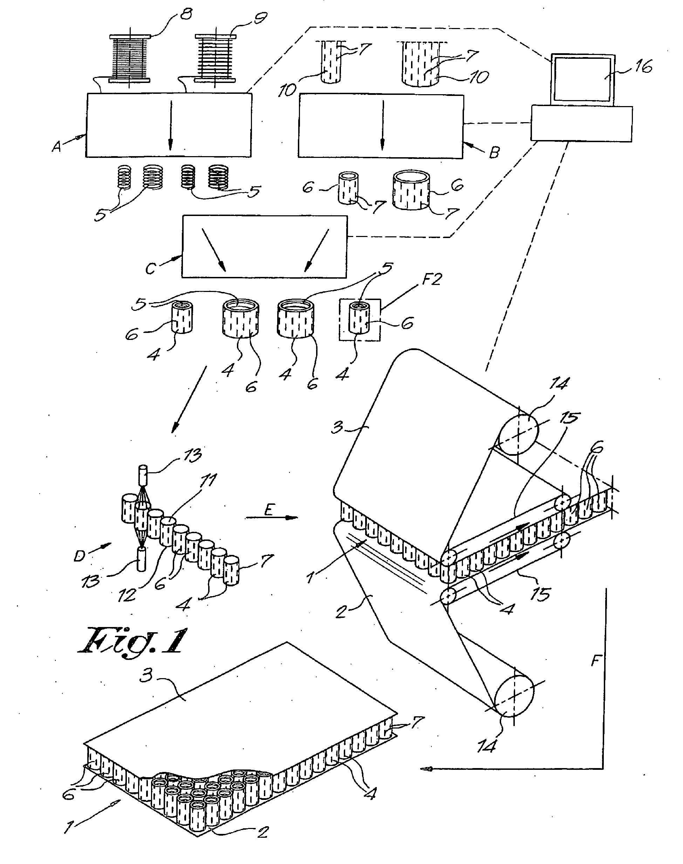

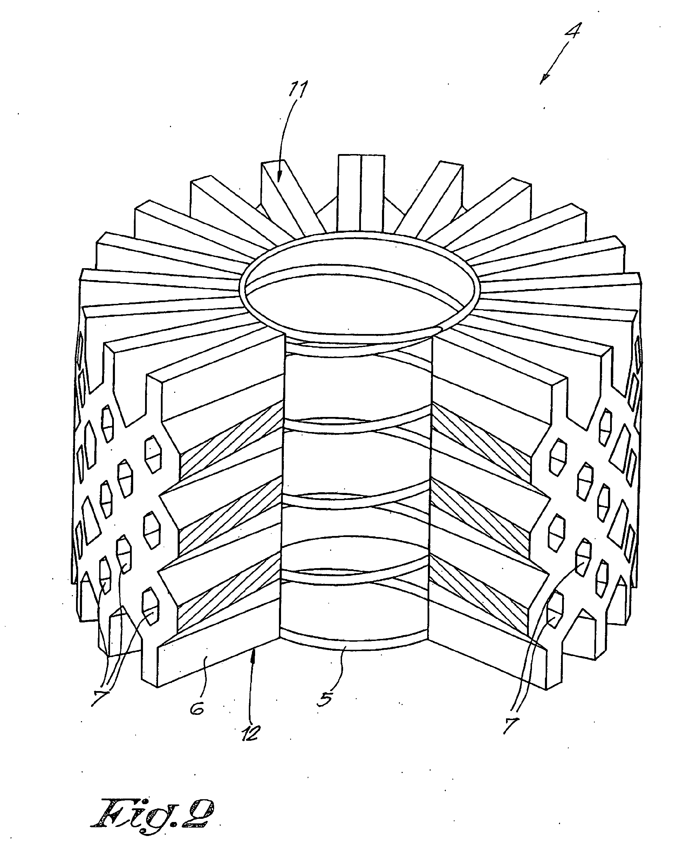

In figure 1 the successive steps are shown of a method according to the invention to produce a mattress core 1, which in general consists of two flexible supports 2 and 3 in between which a number of rows of composed springs 4 are applied which as shown in figure 2, each consist of a wire spring 5 around which a flexible tubular casing 6 of foam is applied, which casing 6 is provided with radially directed cavities 7.

The mattress core 1 is produced based on a number of data which are for example stored in a central controlling computer 16 or the like and which contains for each mattress core 1 to be produced the data concerning the desired layout pattern of the composed springs 4 in between the supports 2-3 and of the desired specific characteristics of each composed spring 4 separately, and this in function of the wishes and needs of the user concerned.

Said data can for example be obtained by a measuring arrangement, not shown in the figures, whereby use is made of a test arrangement with a mattress core onto which a test person can take place and which is provided with a number of springs, the rigidity of which can be set and measured, for example by means of compressed air or the like, in order to realise the most optimal lay comfort for the test person.

Based on the measurement results obtained, composed springs 4 are then automatically made with the desired characteristics and in the desired order.

To this end wire springs 5 are first produced in step A based on a number of reels 8, which reels are each provided with a spring wire 9 with a different diameter of for example 2 millimetre, 2.2 millimetre or the like, whereby the spring wire 9 is coiled by a suitable winding head to a wire spring 5 with a suitable diameter.

At the same time a corresponding casing 6 is produced in step B for each wire spring 5 based on hoses 10 in foam which are provided with radially directed cavities 7 and the casings 6 of which are cut at a suitable length.

The hoses 10 used as a basis, are for example applied to reels not shown in the figures, and have different characteristics which are among others determined by the thickness of the foam casing 6, for example fifteen and twenty millimetre, by the specific gravity of the foam casing, for example 45 or 55 kg/m³ or the like, and especially by the sizes of the foam casing, more particular its inner diameter.

The aforementioned wire springs 5 and foam casings 6 thus obtained, are combined in the next step C into composed springs 4 which comply with the requirements indicated in the computer 16 and the said composed springs are then collected together row by row according to the desired lay-out pattern.

Preferably, for the composition of the springs 4 casings 6 are chosen, the inner diameter of which is, when the casing is not mounted, considerably smaller than the outer diameter of the wire spring 5 concerned, so that the casing 6 interacts with the wire spring 5 with a certain tension.

Consequently, during a step D the cross-cut end faces 11-12 are provided with a layer of glue by means of a glue pistol 13 or the like and in a following step E the glued composed springs 4 are applied row by row in between the supports 2-3 and glued in between these supports, whereby the supports 2-3 are to this end for example each unrolled from a roll 14 and guided together with the composed springs 4 in between two conveyers 15 which are placed opposite of each other.

Once the complete mattress core 1 is composed according to the pattern indicated in the computer 16, the supports 2 and 3 are cut in a step F to the suitable length in order to obtain the finished mattress core 1 which may further be used as a basis for a mattress with the required characteristics in function of the data of the user concerned.

It is obvious that the central computer 16 can be used to control the consequent steps A through F of the method according to the invention in a suitable manner, whereby it is possible to produce mattress cores 1 in an efficient and flexible way on an individual basis and according to a continuous process, so to speak made to measure according to previously set data regarding the requirements of the users.

It is obvious that the number of types wire springs 5 to be produced is relatively limited, but that each type of wire spring 4 may be combined with an unlimited number of types of casings 6, which are chosen automatically by the computer in function of the previously entered scheme. Although in the example shown for the formation of the casings 6, direct use is already made of hoses 10 are from which are delivered on reels, it is not to be excluded that the casings 6 are made piece by piece using flat strips of foam which are perforated or provided with notches to form the cavities 7 and which are folded into a tubular element, whereby the edges of the strip which are applied opposite each other, are glued together.

The present invention is in no way limited to the method described as an example and shown in the figures, but can be realised according to all kinds of other alternatives without departing from the scope of the invention.

## Claims

1. Method to produce a mattress core (1) **characterised in that** the method consists of at least the following steps: a step (A) of producing wire springs (5) with various wire diameters wherein use is made of reels (8-9) with spring wires (9) which are made into wire springs (5) with various diameters by coiling the wire; a step (B) of forming flexible tubular foam casings (6) provided with radially directed cavities (7) which casings (6) have various characteristics; a step (C) of forming composed springs (4) with a desired rigidity from a suitable combination of a casing (6) and a wire spring (5) by means of applying the casing (6) around the wire spring (5); a step (D) of applying glue to the cross-cut end faces (11-12) of the composed springs (4); a step (E) of applying the composed springs provided with glue, in successive rows, between two flexible supports (2-3), according to a user's desired lay-out pattern of composed spring (4) characteristics.

2. Method according to claim 1, **characterised in that** for the step (C) of forming composed springs (4) use is made of foam casings (6), the inner diameter of which, when the foam casings (6) are not applied around the wire spring (5), is smaller than the outer diameter of the wire springs (5) concerned.

3. Method according to claim 2, **characterised in that**, depending on the desired characteristics of a composed spring (4), a foam casing (6) is chosen with a suitable inner diameter and thickness of the foam casing (6) and a suitable rigidity of the foam.

4. Method according to claim 1, **characterised in that** it runs according to an automated process wherein, based on an imposed desired lay-out pattern of the composed springs (4) and on imposed desired characteristics for each of these individual composed springs (4), suitable wire springs (5) and casings (6) are made and combined with each other to obtain composed springs (4) with the desired imposed characteristics and whereby the obtained springs (4) are applied according to the desired pattern in between the supports (2-3) in order to form a mattress core (1) with the desired characteristics.

5. Method according to one of the aforementioned claims, **characterised in that** the casings (6) are formed using foam hoses (10) with various characteristics which are provided with radially directed cavities (7) and of which casings (6) with a suitable length are cut.

6. Method according to one of the claims 1 to 4, **characterised in that** the casings (6) are produced using flat strips of foam with various characteristics, whereby notches are provided in these strips to form the aforementioned cavities (7) and whereby these strips are folded to a tube and the ends of the strips are put together and connected to each other.

## Patentansprüche

1. Verfahren zur Herstellung eines Matratzenkerns (1), **dadurch gekennzeichnet, dass** das Verfahren mindestens aus den folgenden Schritten besteht: einem Schritt (A) des Herstellens von Drahtfedern (5) mit verschiedenen Drahtdurchmessem, wobei von Spulen (8-9) mit Federdrähten (9) Gebrauch gemacht wird, die durch Wickeln des Drahts zu Drahtfedern (5) mit verschiedenen Durchmessern gemacht werden; einem Schritt (B) des Formens flexibler röhrenförmiger Schaumstoffhüllen (6), die mit radial gerichteten Hohlräumen (7) versehen sind, welche Hüllen (6) verschiedene Eigenschaften aufweisen; einem Schritt (C) des Formens zusammengesetzter Federn (4) mit einer gewünschten Steifigkeit aus einer geeigneten Kombination einer Hülle (6) und einer Drahtfeder (5) mittels des Anbringens der Hülle (6) um die Drahtfeder (5); einem Schritt (D) des Anbringens von Klebstoff an den Stirnseiten (11-12) der zusammengesetzten Federn (4); einem Schritt (E) des Anbringens der mit Klebstoff versehenen zusammengesetzten Federn in aufeinanderfolgenden Reihen zwischen zwei flexiblen Trägern (2-3) gemäß einem vom Benutzer gewünschten Gestaltungsmuster von Eigenschaften zusammengesetzter Federn (4).

2. Verfahren nach Anspruch 1, **dadurch gekennzeichnet, dass** für den Schritt (C) des Formens zusammengesetzter Federn (4) von Schaumstoffhüllen (6) Gebrauch gemacht wird, deren Innendurchmesser, wenn die Schaumstoffhüllen (6) nicht um die Drahtfeder (5) herum angebracht sind, kleiner als der Außendurchmesser der betreffenden Drahtfedern (5) ist.

3. Verfahren nach Anspruch 2, **dadurch gekennzeichnet, dass**, abhängig von den gewünschten Eigenschaften einer zusammengesetzten Feder (4), eine Schaumstoffhülle (6) mit einem geeigneten Innendurchmesser und Dicke der Schaumstoffhülle (6) und einer geeigneten Steifigkeit des Schaumstoffs gewählt wird.

4. Verfahren nach Anspruch 1, **dadurch gekennzeichnet, dass** es gemäß einem automatischen Prozess verläuft, wobei, auf Basis eines auferlegten gewünschten Gestaltungsmusters der zusammengesetzten Federn (4) und auferlegten gewünschten Eigenschaften für jede dieser einzelnen zusammengesetzten Federn (4), geeignete Drahtfedern (5) und Hüllen (6) hergestellt und miteinander kombiniert werden, um zusammengesetzte Federn (4) mit den gewünschten auferlegten Eigenschaften zu erhalten, und wobei die erhaltenen Federn (4) gemäß dem gewünschten Muster zwischen den Trägern (2-3) angebracht werden, um einen Matratzenkern (1) mit den gewünschten Eigenschaften zu bilden.

5. Verfahren nach einem der vorgenannten Ansprüche, **dadurch gekennzeichnet, dass** die Hüllen (6) unter Verwendung von Schaumstoffschläuchen (10) mit verschiedenen Eigenschaften gebildet werden, die mit radial gerichteten Hohlräumen (7) versehen sind und wovon Hüllen (6) von geeigneter Länge abgeschnitten werden.

6. Verfahren nach einem der Ansprüche 1 bis 4, **dadurch gekennzeichnet, dass** die Hüllen (6) unter Verwendung flacher Schaumstoffstreifen mit verschiedenen Eigenschaften hergestellt werden, wobei in diesen Streifen Einschnitte zur Bildung der vorgenannten Hohlräume (7) angebracht werden und wobei diese Streifen zu einer Röhre gebogen werden und die Enden der Streifen gegeneinander gebracht und miteinander verbunden werden.

## Revendications

1. Procédé pour la production du noyau (1) d'un matelas, **caractérisé en ce que** le procédé est constitué par au moins les étapes suivantes : une étape (A) dans laquelle on produit des ressorts à spires (5) avec divers diamètres de fils, dans laquelle il est fait usage de bobines (8-9) comprenant des fils pour ressorts (9) que l'on transforme en ressorts à spires (5) possédant divers diamètres par enroulement du fil; une étape (B) dans laquelle on forme des enveloppes tubulaires flexibles en mousse (6) munies de cavités (7) orientées en direction radiale, lesdites enveloppes (6) possédant diverses caractéristiques ; une étape (C) dans laquelle on forme des ressorts composés (4) possédant une rigidité désirée à partir d'une combinaison appropriée d'un enveloppe (6) et d'un ressort à spires (5) via l'application de l'enveloppe (6) autour du ressort à spires (5) ; une étape (D) dans laquelle on applique de la colle sur les faces terminales en coupe transversale (11-12) des ressorts composés (4) ; une étape (E) dans laquelle on applique les ressorts composés munis de colle, sous la forme de rangées successives, entre deux supports flexibles (2-3), conformément au schéma d'agencement désiré par un utilisateur concernant les caractéristiques de ressorts composés (4).

2. Procédé selon la revendication 1, **caractérisé en ce que**, pour l'étape dans laquelle on forme des ressorts composés (4), il est fait usage d'enveloppes en mousse (6) dont le diamètre interne, lorsque les enveloppes en mousse (6) ne sont pas appliquées autour du ressort à spires (5) est inférieur au diamètre externe des ressorts à spires (5) concernés.

3. Procédé selon la revendication 2, **caractérisé en ce que**, en fonction des caractéristiques désirées de ressorts composés (4), on sélectionne une enveloppe en mousse (6) possédant un diamètre interne et une épaisseur appropriée pour l'enveloppe en mousse (6), ainsi qu'une rigidité appropriée de la mousse.

4. Procédé selon la revendication 1, **caractérisé en ce qu'**il est mis en oeuvre conformément à un processus automatisé, dans lequel, en se basant sur un motif d'agencement désiré imposé concernant les ressorts composés (4) et sur des caractéristiques désirées imposées pour chacun de ces ressorts composés individuels (4), on réalise des ressorts à spires appropriés (5) et des enveloppes appropriées (6) et on les combine réciproquement pour obtenir des ressorts composés (4) possédant les caractéristiques désirées imposées, les ressorts obtenus (4) étant appliqués conformément au schéma désiré entre les supports (2-3) afin d'obtenir un noyau de matelas (1) possédant les caractéristiques désirées.

5. Procédé selon l'une quelconque des revendications précédentes, **caractérisé en ce qu'**on forme les enveloppes (6) en utilisant des tuyaux flexibles en mousse (10) possédant diverses caractéristiques, qui sont munis de cavités (7) orientées en direction radiale, et à partir desquels on découpe des enveloppes (6) possédant une longueur appropriée.

6. Procédé selon l'une quelconque des revendications 1 à 4, **caractérisé en ce qu'**on produit les enveloppes (6) en utilisant des bandes plates de mousse possédant diverses caractéristiques, des incisions étant prévues dans ces bandes pour obtenir les cavités susmentionnées (7) et ces bandes étant pliées pour obtenir un tube, les extrémités des bandes étant jointes ensemble et étant reliées les unes aux autres.
